Europäisches Patentamt

European Patent Office

Office européen des brevets

(19)

(11) Publication number: **0 312 014**
**A1**

# (12) EUROPEAN PATENT APPLICATION

(21) Application number: 88116941.1

(22) Date of filing: 12.10.88

(51) Int. Cl.⁴: **B23D 21/04**

(30) Priority: 12.10.87 PL 268184

(43) Date of publication of application:
19.04.89 Bulletin 89/16

(84) Designated Contracting States:
DE FR GB IT

(71) Applicant: **Instytut Obrobki Skrawaniem**
**ul. Wroclawska 37a**
**30-011 Krakow(PL)**

Applicant: **PRZEDSIEBIORSTWO**
**PROJEKTOWANIA I DOSTAW PRZEMYSLU**
**OBRABIAREK I NARZEDZI " PONAR-BIPRON"**
**ul. Solec 48**
**PL-00382 Warszawa(PL)**

(72) Inventor: **Wasilewski, Piotr Andrzej**
**Ul. Sobieskiego 15/4**
**PL-31-136 Kraków(PL)**
Inventor: **Bartosik, Maria**
**Ul. Powstancóv 30a/7**
**PL-31-422 Kraków(PL)**
Inventor: **Pliszka, Adam**
**Ul. Mazowiecka 49/39**
**PL-30-019 Kraków(PL)**
Inventor: **Kolasa, Krzysztof**
**Ul. Chlebowa 3**
**PL-43-316 Bielsko-Biala(PL)**
Inventor: **Zmigrodzki, Stanislaw**
**Ul. Rydla 17**
**PL-32-090 Slomniki(PL)**
Inventor: **Sniechowski, Roman**
**Ul. Józefitóv 21/7**
**PL-30-045 Kraków(PL)**

(74) Representative: **Füchsle, Klaus, Dipl.-Ing. et al**
**Hoffmann . Eitle & Partner Patentanwälte**
**Arabellastrasse 4**
**D-8000 München 81(DE)**

(54) Machine tool with running slides.

(57) The invention solves the problem of construction of a machine tool for turning immobile pipes, allowing smooth entrance of the tool point into the object material to be worked.

The machine tool has a jaw grip (1) with band (6) for fixing and basing on the worked object, freely orientated in space. Grip (1) is permanently connected with a generating reducer (2) with satellitewise mounted slides (3,4). Further, a motoreducer (5) is also fixed on grip (1). The work zone of the machine tool, defined by rotating slides (3,4) is shielded with a casing (7). The generating reducer (2) has a two-stage generating transmission consist-

ing of a stationary annular gear, engaging with slide (3,4), toothed wheels, reeling on its surface, the wheels being mounted on a rotatable disc with a toothed ring, the disc being driven by a toothed wheel of the motoreducer (5).

Fig1

## Machine tool with running slides

This invention relates to a machine tool with running slides fixed on the worked object, and with continuous feed movement, designed for lathing cylindrical objects, particularly pipes.

US patent specifications Nos 3807047 and 4185525 disclose machine tools for working rods or pipes, fixed on the worked object. In these solutions the worked object is stationary during the working process while the tool passes in a generating movement around the object.

The structure of the device for cutting pipes known from the US patent specification No 4624052 has a two stage generating reducer. The reducer has a rotatable disc with a toothed ring, bearing-like set in the reducer body in a special pad, while a roller with a satellite wheel is permanently bearing-like set in the disc. On this roller there is a jointedly set cutting arm and a pawl unit for transforming the rotating movement of the disc to a radial movement of the tool, mounted on the cutting arm link. The device is divided into two parts, linked by a hinge.

A further example of a machine tool for working stationary pipes, particularly power installation pipes or pipelines is a lathe of Soviet manufacture. This tool has a divisional assembly for mounting it on the pipe and generating tool slides.

Tool slides are driven by an engine through a reducer working in cooperation with a rotatable toothed ring.

On this toothed ring there is a compound slide whose feed motion is performed stepwise per each turn by the pawl unit, toothed gear and the bolt/nut configuration. The angle cutting process is performed by means of combining transverse and longitudinal feed motion. Transformation of feed into rotation is possible by means of replacing the pawl wheel, whereas any change in cutting angle - through adjusting the pawl wheel and toothed gear. The machine tool is mounted on the pipe with the use of a cam and roller unit.

The machine tool of the invention has a jaw grip fixing it onto the external diameter of the worked object. It also has a two stage generating reducer which has tool slides permanently fixed to its toothed ring of its rotatable element. The toothed ring is driven by the moto-reducer, mounted on the body of the generating reducer.

The gist of the solution of the invention consists in that the machine tool is equipped with a continuous work feed mechanism, comprising toothed gear, consisting of two stage generating reducer, as well as a cross and/or longitudinal slide.

The slide is replaceably fitted in basic holes of the rotatable disc of the reducer and is permanently combined with a satellite wheel, reeling on an immobile toothed ring of the generating reducer.

The grip of the machine tool has at least three concentric jaws, guided radially by a key in the grip body. These jaws are clamped in the body by means of a clamping screw, locking them in position.

Fixed to the grip there is a band clip, comprising an eccentric clip, a cramp and a band encircling the external diameter of the object.

The cross slide in the kinematic chain of continuous mechanical feed has a three-stage transmission comprising at the first stage a worm gear housed in the transitory casing, at the second stage a worm gear and at the third stage a bolt/nut gear both latter gears being housed in the cross slide body.

The body of the cross slide is torsionally mounted in relation to the transitory casing around the worm axis of the second stage, terminated with a splined roller cooperating with the splined opening in the worm gear of the first stage.

Combination of the first and third stage of the transmission is effected by the feed-screw of the compound slide, producing continuous radial feed motion of the cross slide, which cooperates with the nut, connected with the worm gear of the second stage. The cross slide has a manually driven screw, producing the longitudinal setting motion, the screw being connected with the tool gripper plate and cooperating with the nut set in the compound slide.

The longitudinal slide in the kinematic chain of continuous mechanical feed has a three-stage transmission, comprising, at the first stage, a worm gear, at the second stage - a worm gear and at the third stage - a bolt/nut gear. Combination of the first and second stage of transmission is effected by means of a splined roller which forms an elongation of the second stage worm axis, cooperating with the splined opening in the first stage worm gear. Combination of the second and third stage of transmission is effected by means of a tool gripper feed-screw, producing continuous longitudinal feed motion. The feed-screw cooperates with a nut, in form of the second stage worm. The longitudinal slide has a manually driven screw which produces radial setting motion, the screw being connected with the first stage transmission body and cooperating with the nut set in the body of second and third stage transmission, combined with the tool gripper.

The grip and generating reducer are sectional. The sectional parts of the generating reducer are as follows: body of the generating reducer and a bit with pads, which form the bearing frame of the rotational disc with toothed ring, an annular gear and a rotational disc with a toothed ring. Both parts of the grip and generating reducer are permanently interconnected, steadied with straight pins - full and flatted - and connected with T-bolts on springs. Moreover, in order to brace the rotational disc, both its parts are steadied with straight pins - full and flatted - and connected with bolt and nut. Fitted to the body of the generating reducer, there is a biposition catch, locking the disc in a certain position.

The machine tool of the invention allows to perform the operations of cutting, planning, canting, angle lathing and straight turning of external and internal surfaces of cylindrical objects.

An advantage of the solution according to the invention is the continuous feed motion, ensuring smooth entrance of the tool point into the worked object material. The machine tool may be mounted on the worked object at any orientation of this object in space.

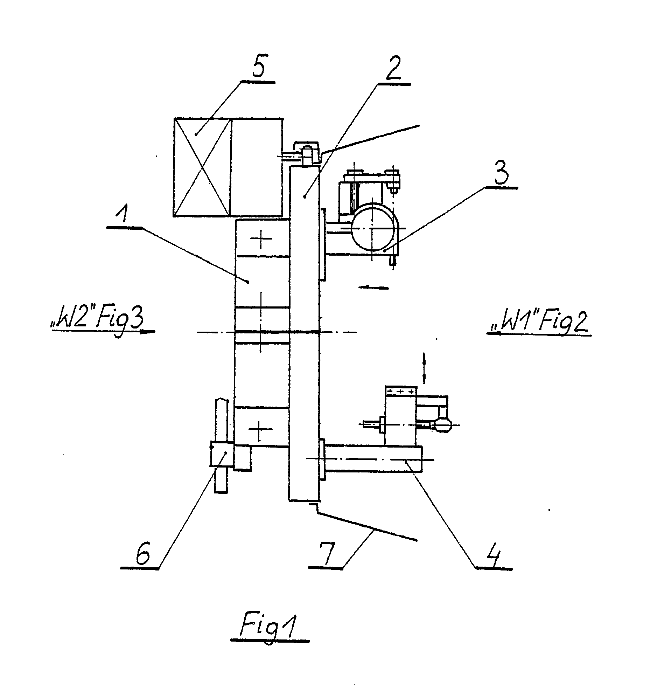

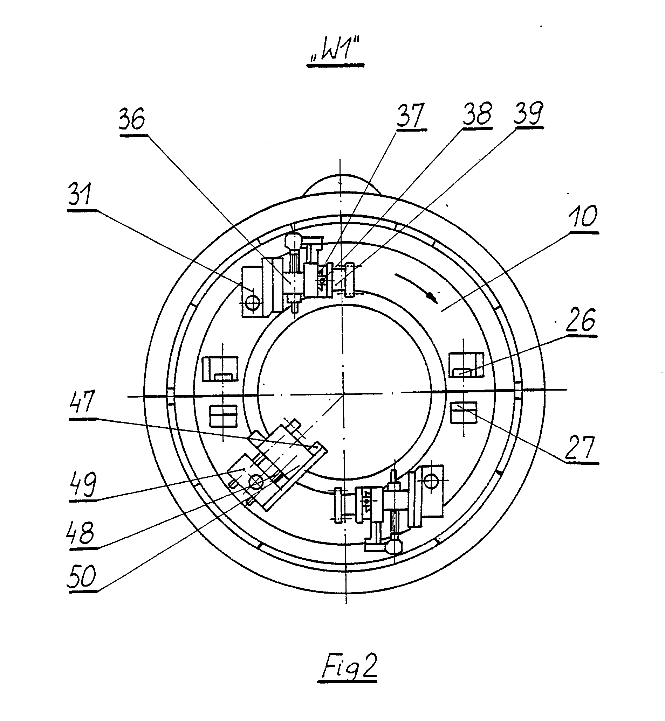

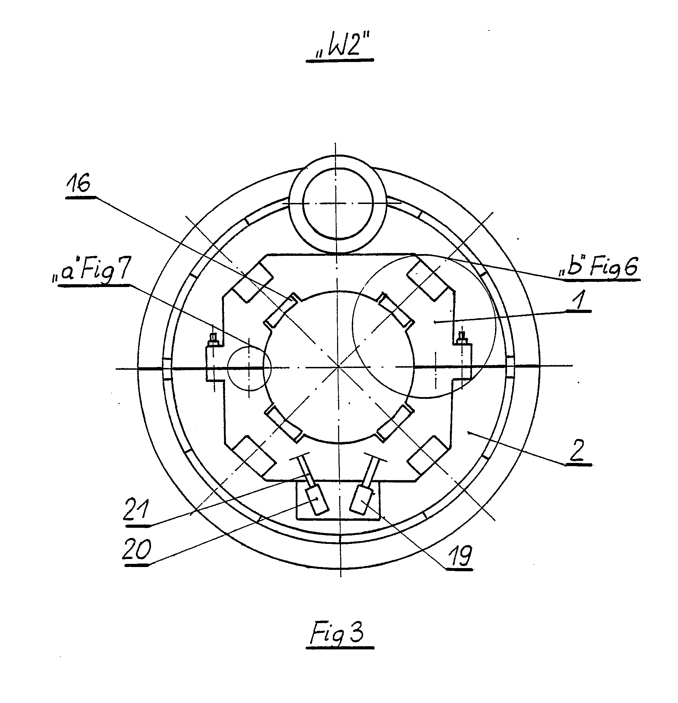

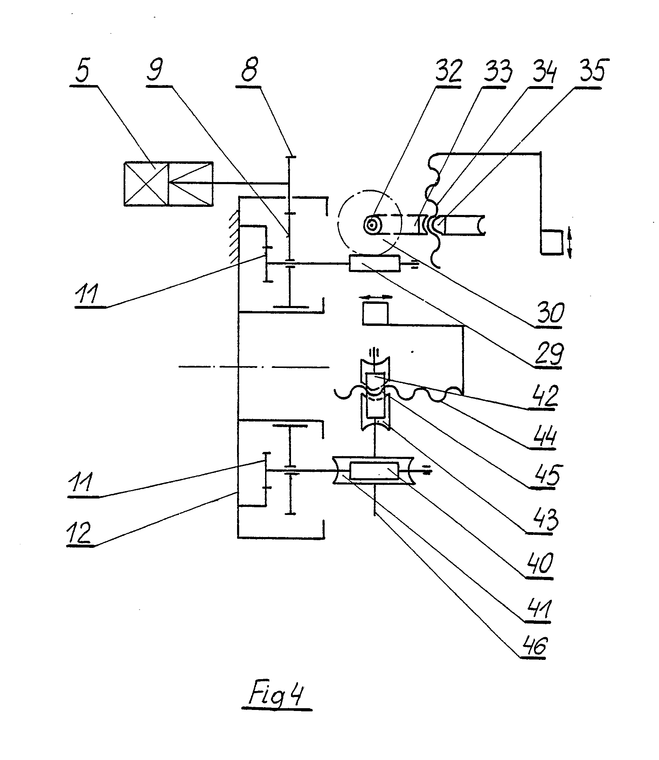

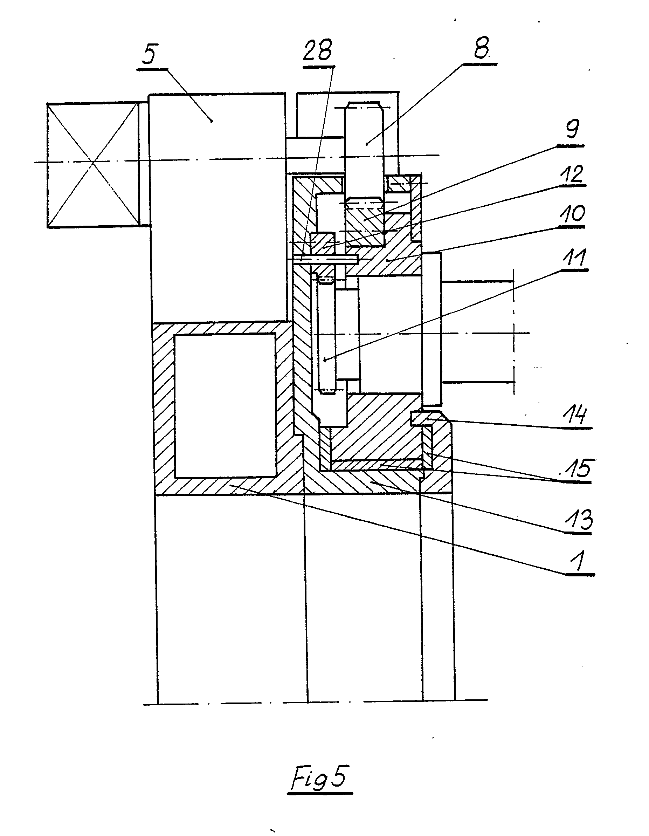

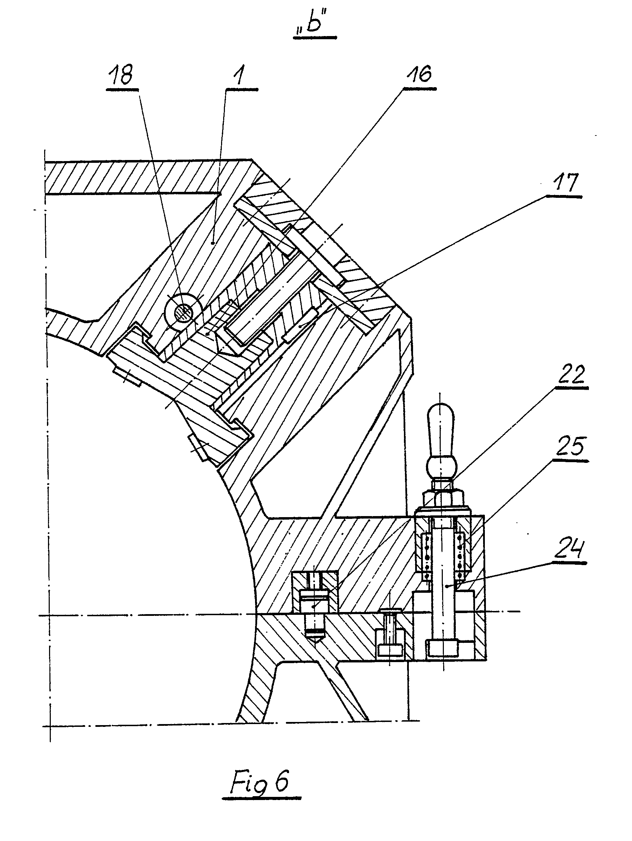

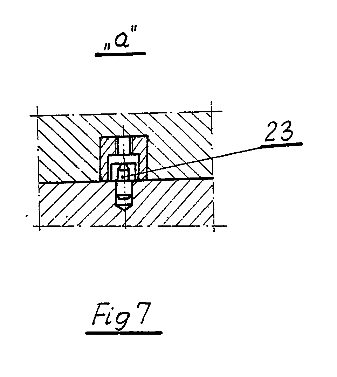

The subject of the invention in a preferred embodiment of sectional machine tool is presented in the drawing, in which Fig. 1 is a top view of the machine tool, Fig. 2 - view of the machine tool face in the direction W1 as marked in Fig. 1, Fig. 3 - rear view of the machine tool in W2 direction, as marked in Fig. 1, Fig. 4 kinematic scheme of the machine tool, Fig. 5 - longitudinal half-section of generating reducer, Fig. 6 - section of the fixing jaw, marked as detail "b" in Fig. 3, Fig. 7 - section of the flatted pin, marked as detail "a" in Fig. 3.

The base and bearing unit of the machine tool is a bisectional fixing grip 1, to which a sectional generating reducer 2 is attached, with two cross slides 3 and longitudinal slide 4 mounted satellite-wise on its rotatable disc. In the upper part pf grip 1 there is a motoreducer 5.

The work zone of machine tool is shielded by casing 7 mounted on body 13 of generating reducer 2, to ensure safe operation and facilitate disposal of chips. The generating reducer 2 consists of two-stage toothed gear comprising the following set of pairs of wheels: at the first stage of driving toothed wheel 8 set at the exit from the motoreducer 5 and driven toothed ring 9 set on the rotatable disc 10, and at the second stage satellite toothed wheels 11 set on entrance rollers of slides 3,4 and immobile toothed ring 12, combined with body 13 of generating reducer 2. The rotatable disc 10 is slidably born in the bearing frame, consisting of body 13 and bit 14 with pads 15. Grip 1 has four V-block jaws 16, evenly spaced along the circumference , guided radially by key 17 in the grip body 1, wherein they are clamped and locked by clamping screw 18.

At the lower part of grip 1 at the rear there is a band clip 6 for initial setting of the machine tool on the pipe, comprising a cam-lever grip 19 for quick fixing and cramp 20 for precise fixing, and encircling band 21.

Both parts of grip 1 and generating reducer 2 are permanently interconnected, steadied with full straight pins 22 and flatted pins 23 and connected by means of T-bolts 24, set on springs 25.

Both parts of rotatable disc 10, for bracing, are steadied also with straight full and flatted pin and connected by screw 26 and nut 27, and the predetermined position of disc 10 in relation to disconnectible parts of generating reducer 2 is ensured by a biposition catch 28 set in body 13 of generating reducer 2, used also as a lock in the electrical control system of the machine tool.

Cross slide 3 has a three-stage transmission consisting of: at the first stage - worm gear 29,30 housed in a transitory casing 31, at the second stage -worm gear 32,33 and at the third stage - bolt 34/nut 35 gear, both latter ones being housed in body 36 of cross slide 3. A body 36 is torsionally mounted in relation to the transitory casing 31 around the worm axis 32 of the second stage, which terminates in the form of a splined roller, cooperating with splined opening in the worm gear 30 of the first stage. Combination of the second and third stage transmission is effected by the feed-screw 34 of compound slide 37, producing continuous feed motion r.p. of cross slide cooperating with nut 35, combined with worm 33 of the second stage.

Cross slide 3 has a manually driven screw 38, producing longitudinal setting motion r.u, the screw being combined with the tool gripper 39 plate, cooperating with a nut set in compound slide 37.

Longitudinal slide 4 has a three-stage transmission, comprising at the first stage - a worm gear 40,41, at the second stage - worm gear 42,43, and at the third stage - bolt 44/nut 45 gear.

Combination of the first and second stage transmission is effected by a splined roller 46 which forms an elongation of the second stage worm 42 axis, cooperating with splined opening of worm 41 of the first stage. Combination of the second and third stage of transmission is effected by means of a gripper 47 feed-screw 44, producing continuous longitudinal feed motion r.p. of longitudinal slide 4, wherein the screw cooperates with a nut in form of the second stage worm 43. Moreover, longitudinal slide 4 has a manually driven screw 48 for producing radial motion r.u., the screw being combined with body 49 of the first stage transmission, cooperating with the nut set in body 50 of the second and third stage transmission, to which tool gripper 47 is attached.

Assembly of the machine tool on the pipe is commenced by fixing its lower part with the use of band clip 6, after prior extending of jaws 16 of grip 1 to predetermined pipe dimension. After the lower part of the machine tool is set, the upper part is assembled by steadying on pins 22,23 and then sectional grip 1 is linked with T-bolts 24 and sectional rotatable disc 10 with bolts 26 with nuts 27, thus obtaining a rigid structure of the machine tool, The next operation is basing the machine tool on predetermined pipe dimension by means of jaws 16 of grip 1 and releasing of band clip 6. This is followed by setting motion of slides 3,4 with tools to prepare the machine tool for performing the planned technological operation.

## Claims

1. Machine tool with generating slides comprising a jaw grip, which fixes the machine tool onto the external diameter of the worked object, a two-stage generating reducer with tool slides permanently fixed to its rotatable element with a toothed ring, and a motoreducer, cooperating with the toothed ring, characterized in that it comprises a continuous work feed motion mechanism, comprising toothed gear, consisting of a two-stage generating reducer (2) and cross (3) and/or longitudinal slide, replaceably set in base holes of a rotatable disc (10) of the generating reducer (2), wherein slide (3,4) is permanently attached to a satellite toothed wheel (11) reeling on an immobile annular gear (12) of the generating reducer (2), moreover grip (1) comprises at least three concentric jaws (16) lead radially by a key (17) in the grip body (1) and clamped therein by a screw (18), further possessing a band clip (6) consisting of a cam-lever grip (19), a cramp (20) and an encircling band (21).

2. Machine tool as claimed in claim 1, characterised in that cross slide (3) in the kinematic chain of the continuous mechanical feed has a three-stage transmission comprising at the first stage a worm gear (29,30) housed in a transitory casing (31), at the second stage - worm gear (32,33), at the third stage - bolt/nut (34,35) gear, both the latter ones housed in body (36) of the cross slide (3), wherein body (36) of the cross slide (3) is torsionally mounted in relation to a transitory casing (31) around the worm (32) axis of the second stage, the axis being terminated in form of a splined roller cooperating with a splined opening of worm (30) of the first stage, and combination of the second and third stage transmission is effected by means of a feed-screw (34) of a compound slide (37), producing continuous radial feed motion r.p. of the cross slide (3), the screw (34) cooperating with the nut (35) connected with the worm (33) of the second stage, and moreover the cross slide (3) has a manually driven screw (38) for producing longitudinal setting motion r.u., the screw (38) being combined with a tool gripper (39) plate and cooperating with the nut set in compound slide (37).

3. Machine tool as claimed in claim 1, characterised in that the longitudinal slide (4) in the kinematic chain of continuous mechanical feed motion has a three-stage transmission, comprising at the first stage a worm gear (40,41), at the second stage worm gear (42,43), and at the third stage - a bolt/nut (44,45) gear, combination of the first and second stage of transmission being effected by means of a splined roller (46) which forms an elongation of the second stage worm (42) axis, cooperating with a splined opening of the first stage worm (41), whereas combination of the second and third stage of transmission is effected by means of a feed-screw (44) of a tool gripper (47), producing continuous longitudinal feed motion r.p. of the longitudinal slide (4), the screw (44) cooperating with the nut (45), combined with the second stage worm (43), wherein the longitudinal slide (4) has further a manually driven screw (48) for producing radial setting motion r.u., the screw (48) being combined with body (49) of the first stage transmission, and cooperating with nut set in body (50) of the second and third stage transmission, to which the tool gripper (47) is attached.

4. Machine tool as claimed in claim 2 or 3, characterised in that grip (1) and generating reducer (2), comprising body (13) of generating reducer (2) and bit (14) with pads (15), annular gear (12), rotatable disc (10) and toothed ring (9) are sectional, both parts of grip (1) and generating reducer (2) being permanently interconnected, steadied by means of full (22) and flatted (23) straigth pins and linked with T-bolts (24) on springs (25) and, further, both parts of disc (10) are steadied with full and flatted straight pins, linked by a bolt (26) and a nut (27), whereas on body (13) of the generating reducer (2) there is a biposition catch (28), locking disc (10) in a predetermined position.

Fig1

"W1"

Fig 2

„W2"

16

„a"Fig 7

„b" Fig 6

1

2

21

20

19

Fig 3

5   9   8   32   33   34   35

11

30

29

42

44

45

43

11

40

12

41

46

Fig 4

Fig 5

„b"

Fig 6

„a"

23

Fig 7

# EUROPEAN SEARCH REPORT

. Application number

## DOCUMENTS CONSIDERED TO BE RELEVANT

EP 88116941.1

| Category | Citation of document with indication, where appropriate, of relevant passages | Relevant to claim | CLASSIFICATION OF THE APPLICATION (Int. Cl.4) |
|---|---|---|---|
| A | DE - A1 - 2 836 919 (REX)<br>* Totality *<br>-- | 1 | B 23 D 21/04 |
| D,A | US - A - 4 185 525 (SHERER)<br>* Totality *<br>-- | 1 | |
| D,A | US - A - 3 807 047 (SHERER)<br>* Totality *<br>-- | 1 | |
| D,A | US - A - 4 624 052 (GARCIA)<br>* Totality *<br>---- | 1 | |

|  |
|---|
| **TECHNICAL FIELDS SEARCHED (Int. Cl.4)** |
| B 23 D |
| B 23 Q |
| B 23 B |

The present search report has been drawn up for all claims

| Place of search | Date of completion of the search | Examiner |
|---|---|---|
| VIENNA | 29-12-1988 | KRUMPSCHMID |